# EUROPEAN PATENT APPLICATION

(11) **EP 4 661 146 A1**
(43) Date of publication of application: **10.12.2025**
(21) Application number: 24749905.6
(22) Date of filing: 12.01.2024
(51) Int. Cl.: H01M 10/0587, H01M 4/134, H01M 50/107, H01M 50/152, H01M 50/342, H01M 50/474, H01M 50/477, H01M 50/593

(54) **NONAQUEOUS ELECTROLYTE SECONDARY BATTERY**

(30) Priority: 30.01.2023 JP 2023011761
(71) Applicant: Panasonic Intellectual Property Management Co., Ltd., Kadoma-shi, Osaka 571-0057 (JP)
(72) Inventor: INOUE, Kaoru, Kadoma-shi, Osaka 571-0057 (JP)
(74) Representative: Novagraaf International SA
(86) International application number: PCT/JP2024/000641
(87) International publication number: WO 2024/161950

(57) **Abstract**

A nonaqueous electrolyte secondary battery (10) according to one embodiment of the present disclosure is provided with: an electrode body (14) which is obtained by winding a positive electrode (11) and a negative electrode (12), with a separator (13) being interposed therebetween; a bottomed cylindrical outer package can (20) which houses the electrode body (14); a sealing body (19) which seals an opening of the outer package can (20); an insulating plate (16) which is positioned between the electrode body (14) and a bottom part (21) of the outer package can (20); and a spacer (28) which is positioned between the insulating plate (16) and the bottom part (21) of the outer package can (20). The sealing body (19) has a safety valve which releases an internal pressure of the outer package can (20) when the internal pressure is increased to a predetermined level or higher. The spacer (28) has a plurality of grooves (29) in at least one of insulating plate (16)-side surfaces, the plurality of grooves (29) extending in one direction. The plurality of grooves (29) are formed at a distance from each other in another direction that is perpendicular to the one direction.

## Description

### TECHNICAL FIELD

The present disclosure relates to a non-aqueous electrolyte secondary battery.

### BACKGROUND ART

Conventionally, non-aqueous electrolyte secondary batteries such as lithium-ion secondary batteries are known, comprising an electrode assembly (winding assembly) in which positive and negative electrodes are wound around a separator and an outer housing can that houses the electrode assembly and an electrolyte solution. Patent Literature 1 and Patent Literature 2 disclose non-aqueous electrolyte secondary batteries provided with a space in a lower portion of the batteries by forming a step in a lower portion of an outer housing can.

### CITATION LIST

### PATENT LITERATURE

PATENT LITERATURE 1: Japanese Unexamined Patent Application Publication No. 2001-57245
PATENT LITERATURE 2: Japanese Patent No. 4321027

### SUMMARY

In a non-aqueous electrolyte secondary battery, smoothly exhausting high-temperature gases inside the battery to the outside of the battery when the battery generates abnormal heat is an important issue. However, repeated charging and discharging may cause the electrode assembly to expand in a longitudinal direction of the battery due to expansion and contraction of a negative electrode active material forming a negative electrode, thereby clogging an exhaust path of high-temperature gases in a lower portion of the battery and preventing smooth exhaust.

The non-aqueous electrolyte secondary batteries disclosed in Patent Literature 1 and Patent Literature 2 are provided with a space in the lower portion of the batteries. However, in the configurations disclosed in Patent Literature 1 and Patent Literature 2, when the electrode assembly expands in the longitudinal direction of the battery due to charging and discharging, stress tends to concentrate at the step formed in the lower portion of the outer housing can. When stress concentration occurs, electrode plates of the positive electrode and the negative electrode that make up the electrode assembly may deform, resulting in an internal short-circuit. In consideration thereof, an object of the present disclosure is to provide a non-aqueous electrolyte secondary battery that can smoothly exhaust high-temperature gases inside the battery to the outside of the battery when the battery generates abnormal heat while suppressing internal short-circuits.

A non-aqueous electrolyte secondary battery that is an aspect of the present disclosure comprises: an electrode assembly in which a positive electrode and a negative electrode are wound around a separator; a cylindrical bottomed outer housing can that houses the electrode assembly; a sealing assembly that seals an opening of the outer housing can; an insulating plate that is positioned between the electrode assembly and a bottom portion of the outer housing can; and a spacer that is positioned between the insulating plate and the bottom portion of the outer housing can, wherein the sealing assembly has a safety valve that releases internal pressure of the outer housing can when the internal pressure rises to or above a predetermined level, the spacer has a plurality of grooves extending in one direction on a surface on a side of the insulating plate, and the plurality of grooves are arranged spaced apart from each other in another direction that is perpendicular to the one direction.

In addition, a non-aqueous electrolyte secondary battery that is another aspect of the present disclosure comprises: an electrode assembly in which a positive electrode and a negative electrode are wound around a separator; a cylindrical bottomed outer housing can that houses the electrode assembly; a sealing assembly that seals an opening of the outer housing can; and an insulating plate that is positioned between the electrode assembly and a bottom portion of the outer housing can, wherein the sealing assembly has a safety valve that releases internal pressure of the outer housing can when the internal pressure rises to or above a predetermined level, at least one of a surface of the insulating plate on a side of the bottom portion of the outer housing can and an inner surface of the bottom portion of the outer housing can has a plurality of grooves extending in one direction, and the plurality of grooves are arranged spaced apart from each other in another direction that is perpendicular to the one direction.

According to the non-aqueous electrolyte secondary battery of the present disclosure, high-temperature gases inside the battery can be smoothly exhausted to the outside of the battery when the battery generates abnormal heat while suppressing internal short-circuits.

### BRIEF DESCRIPTION OF DRAWINGS

FIG. 1 is a sectional view of a non-aqueous electrolyte secondary battery that is an example of an embodiment.
FIG. 2 is a plan view of an insulating plate which the non-aqueous electrolyte secondary battery shown in FIG. 1 comprises.
FIG. 3 is a plan view of an insulating plate that is another example of the embodiment.
FIG. 4 is a plan view of an insulating plate that is another example of the embodiment.
FIG. 5 is a plan view of a spacer which the non-aqueous electrolyte secondary battery shown in FIG. 1 comprises.
FIG. 6 is an enlarged perspective view of grooves formed on the spacer which the non-aqueous electrolyte secondary battery shown in FIG. 1 comprises.
FIG. 7 is a sectional view of a non-aqueous electrolyte secondary battery that is another example of the embodiment.
FIG. 8 is a sectional view of a non-aqueous electrolyte secondary battery that is another example of the embodiment.

### DESCRIPTION OF EMBODIMENT

Hereinafter, an example of an embodiment of a non-aqueous electrolyte secondary battery according to the present disclosure will be described in detail with reference to the drawings. The embodiment described below is merely an example and the present disclosure is not limited to the following embodiment. In addition, configurations created by selectively combining respective constituent elements of the embodiment described below are included in the scope of the present disclosure.

While a cylindrical battery in which a wound electrode assembly is housed in a cylindrical bottomed outer housing can will be exemplified below, the outer housing can of the battery is not limited to a cylindrical outer housing can and may be, for example, a rectangular outer housing can (rectangular battery), a coin-shaped outer housing can (coin-shaped battery), or an outer housing can constituted of a laminate sheet including a metal layer and a resin layer (laminated battery).

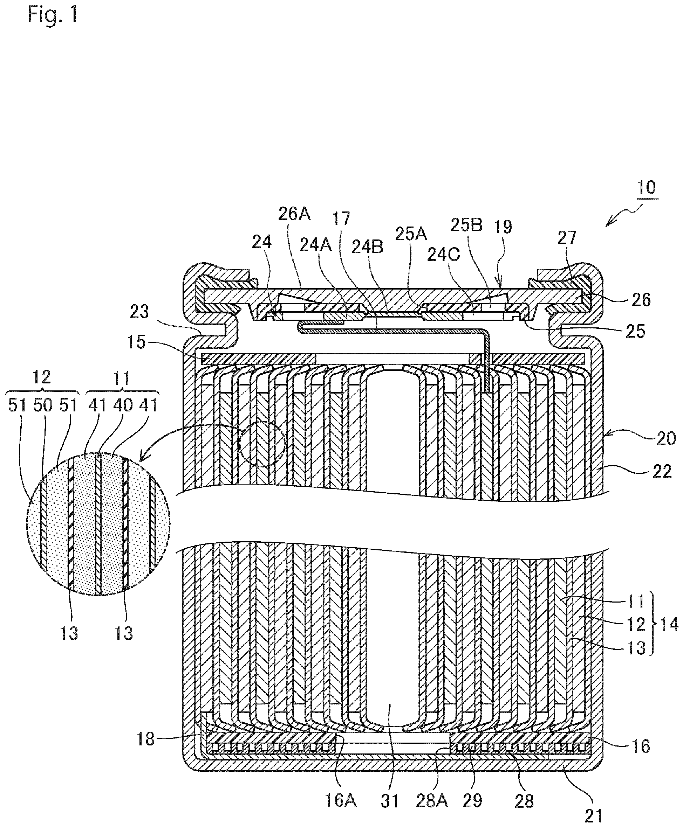

FIG. 1 is a diagram schematically showing a cross section of a non-aqueous electrolyte secondary battery (hereinafter, simply referred to as a battery) 10 that is an example of the embodiment. As shown in FIG. 1, the battery 10 comprises an electrode assembly 14, a non-aqueous electrolyte (not illustrated), and an outer housing can 20 that houses the electrode assembly 14 and the non-aqueous electrolyte. The electrode assembly 14 has a positive electrode 11, a negative electrode 12, and a separator 13 and has a wound structure in which the positive electrode 11 and the negative electrode 12 are wound in a spiral shape around the separator 13. The outer housing can 20 is a cylindrical bottomed metal container with one side in an axial direction opened, and the opening of the outer housing can 20 is sealed by a sealing assembly 19. Although details will be described later, in the present embodiment, the sealing assembly 19 has a safety valve that releases internal pressure of the outer housing can 20 when the internal pressure rises to or above a predetermined level. Hereinafter, a side of the sealing assembly 19 in the axial direction (height direction) of the battery 10 will be referred to as "up or above" and a side of a bottom portion 21 of the outer housing can 20 in the axial direction will be referred to as "down or below"

The non-aqueous electrolyte has lithium-ion conductivity. The non-aqueous electrolyte may be a liquid electrolyte (electrolytic solution) or a solid electrolyte.

The liquid electrolyte (electrolytic solution) contains a non-aqueous solvent and an electrolyte salt dissolved in the non-aqueous solvent. As the non-aqueous solvent, for example, esters, ethers, nitriles, amides, and mixtures of two or more of these substances are used. Examples of the non-aqueous solvent include ethylene carbonate (EC), ethyl methyl carbonate (EMC), dimethyl carbonate (DMC), diethyl carbonate (DEC), and a mixture of these solvents. The non-aqueous solvent may contain halogen substitutes (for example, fluoroethylene carbonate) in which at least some of the hydrogen of the solvents is replaced with halogen atoms such as fluorine. For example, lithium salts such as LiPF₆ are used as the electrolyte salts.

As the solid electrolyte, for example, a solid or gel polymer electrolyte, an inorganic solid electrolyte, and the like can be used. As the inorganic solid electrolyte, known materials used in all-solid-state lithium-ion secondary batteries and the like (for example, oxide-based solid electrolytes, sulfide-based solid electrolytes, and halogen-based solid electrolytes) can be used. A polymer electrolyte contains, for example, a lithium salt and a matrix polymer or a non-aqueous solvent, a lithium salt, and a matrix polymer. As the matrix polymer, for example, a polymer material that absorbs a non-aqueous solvent and becomes a gel is used. Examples of polymer materials include fluorine resins, acrylic resins, and polyether resins.

The positive electrode 11, the negative electrode 12, and the separator 13 which constitute the electrode assembly 14 are all long, strip-like bodies which are wound in a spiral shape and stacked alternately in a radial direction of the electrode assembly 14. The negative electrode 12 is formed slightly larger than the positive electrode 11 in order to prevent lithium precipitation. In other words, the negative electrode 12 is formed longer than the positive electrode 11 in a longitudinal direction and a width direction (transverse direction). The separator 13 is formed slightly larger than at least the positive electrode 11, and two separators 13 are arranged so as to sandwich the positive electrode 11. The battery 10 comprises a first insulating plate 15 and a second insulating plate arranged above and below the electrode assembly 14, respectively.

The positive electrode 11 includes a positive electrode core 40 and a positive electrode mixture layer 41 formed on the positive electrode core 40. As the positive electrode core 40, a foil of a metal that is stable in a potential range of the positive electrode 11 such as aluminum or an aluminum alloy and a film with the metal arranged on a surface layer can be used. The positive electrode mixture layer 41 includes a positive electrode active material, a conductive agent, and a binding agent. For example, the positive electrode 11 can be fabricated by coating the positive electrode core 40 with a positive electrode mixture slurry containing the positive electrode active material, the conductive agent, the binding agent, and the like, letting the coating film dry, and then compressing the positive electrode 11 to form the positive electrode mixture layer 41 on both surfaces of the positive electrode core 40.

The positive electrode mixture layer 41 contains a granulated lithium metal composite oxide as the positive electrode active material. A lithium metal composite oxide is a composite oxide containing metal elements such as Co, Mn, Ni, and Al in addition to Li. The metal element comprising the lithium metal composite oxide is at least one selected from the group consisting of, for example, Mg, Al, Ca, Sc, Ti, V, Cr, Mn, Fe, Co, Ni, Cu, Zn, Ga, Ge, Y, Zr, Sn, Sb, W, Pb, and Bi. Among these metal elements, at least one selected from the group consisting of Co, Ni, Al and Mn is preferable. Examples of suitable composite oxides include a lithium metal composite oxide containing Ni, Co, and Mn and a lithium metal composite oxide containing Ni, Co, and Al.

Examples of the conductive agent included in the positive electrode mixture layer 41 include carbon black such as acetylene black and Ketjen black, graphite, carbon nanotubes (CNT), carbon nanofibers, graphene, and other carbon materials. Examples of the binding agent included in the positive electrode mixture layer 41 include fluorinated resins such as polytetrafluoroethylene (PTFE) and polyvinylidene fluoride (PVDF), polyacrylonitrile (PAN), polyimide, acrylic resins, and polyolefin. In addition, these resins may be used in combination with carboxymethyl cellulose (CMC) or its salts, polyethylene oxide (PEO), and the like.

The negative electrode 12 includes a negative electrode core 50 and a negative electrode mixture layer 51 formed on the negative electrode core 50. As the negative electrode core 50, a foil of a metal that is stable in a potential range of the negative electrode 12 such as copper or a copper alloy or a film with the metal arranged on a surface layer can be used. The negative electrode mixture layer 51 includes a negative electrode active material, a binding agent, and, if necessary, a conductive agent. The negative electrode 12 can be fabricated by coating a surface of the negative electrode core 50 with a negative electrode mixture slurry containing the negative electrode active material, the binding agent, and the like, letting the coating film dry, and then compressing the negative electrode core 50 to form the negative electrode mixture layer 51 on both surfaces of the negative electrode core 50.

The negative electrode mixture layer 51 preferably contains a carbon material and a silicon-containing material as the negative electrode active material. The inclusion of the silicon-containing material facilitates both high capacity and excellent cycle characteristics. For example, as the negative electrode active material, a material containing at least one of an element such as Sn that alloys with Li and a material containing the element may be used in the negative electrode mixture layer 51.

From the viewpoint of high capacity, a content of the silicon-containing material is preferably greater than or equal to 10% by mass of the total mass of the negative electrode active material, more preferably greater than or equal to 12% by mass, and even more preferably greater than or equal to 15% by mass. In general, since silicon-containing materials have a higher rate of expansion during charging and discharging than carbon materials, the electrode assembly 14 expands in an up-down direction of the battery after repeated charging and discharging and an exhaust path for high-temperature gases in a lower portion of the battery is easily clogged. As described in detail below, in the present embodiment, a spacer 28 with a plurality of grooves 29 formed thereon is provided to secure an exhaust path for high-temperature gases in the lower portion of the battery. Accordingly, an effect of the present disclosure becomes more pronounced when including a silicon-containing material as the negative electrode active material.

A carbon material that serves as the negative electrode active material is, for example, at least one selected from the group consisting of natural graphite, artificial graphite, soft carbon, and hard carbon. Among these materials, as the carbon material, at least an artificial graphite such as massive artificial graphite (MAG) and graphitized mesophase carbon microbeads (MCMB), a natural graphite such as scale-like graphite, lump graphite, and earthy graphite, or a mixture of these materials are preferably used. A volume-based D50 of the carbon material is, for example, greater than or equal to 1 µm and less than or equal to 30 µm, and preferably greater than or equal to 5 µm and less than or equal to 25 µm.

From the viewpoint of high capacity, a content of the silicon-containing material is preferably greater than or equal to 5% by mass of the total mass of the negative electrode active material, more preferably greater than or equal to 8% by mass, and even more preferably greater than or equal to 10% by mass. In general, silicon-containing materials have a larger volume change during charging and discharging than carbon materials. Therefore, when containing a silicon-containing material as the negative electrode active material, the electrode assembly 14 expands more in an up-down direction of the battery after repeated charging and discharging and an exhaust path for high-temperature gases is easily clogged. As described in detail below, in the present embodiment, the spacer 28 with a plurality of the grooves 29 formed thereon is provided in the lower portion of the battery to secure an exhaust path for high-temperature gases. Accordingly, an effect of the present disclosure becomes more pronounced when containing a silicon-containing material as the negative electrode active material.

A suitable silicon-containing material (composite material) is composite particles containing an ion-conducting phase, a Si phase dispersed in the ion-conducting phase, and a conductive layer covering the surface of the ion-conducting phase. The ion-conducting phase is, for example, at least one selected from the group consisting of a silicate phase, an amorphous carbon phase, a silicide phase, and a silicon oxide phase. The Si phase is formed by Si dispersed in the form of fine particles. The ion-conducting phase is a continuous phase comprising a finer set of particles than the Si phase. The conductive layer comprises a material with higher conductivity than the ion-conducting phase and forms a favorable conductive path in the negative electrode mixture layer 51.

An example of a suitable composite material containing Si is composite particles that have a sea-island structure with fine Si dispersed approximately uniformly in an amorphous silicon oxide phase and is represented as a whole by the general formula SiOₓ (0 < x ≤ 2). A main component of silicon oxide may be silicon dioxide. A content ratio (x) of oxygen to Si is, for example, 0.5 ≤ x < 2.0, and preferably 0.8 ≤ x ≤ 1.5.

In a similar manner to the positive electrode mixture layer 41, although fluorine-containing resin, PAN, polyimide, acrylic resin, polyolefin, and the like can be used for the binding agent included in the negative electrode mixture layer 51, styrene butadiene rubber (SBR) is preferably used. In addition, the negative electrode mixture layer 51 preferably contains CMC or its salts, polyacrylic acid (PAA) or its salts, polyvinyl alcohol (PVA), or the like. In particular, suitably, SBR is used in combination with CMC or its salts, PAA or its salts, or the like. The negative electrode mixture layer 51 may include a conductive agent such as CNT.

A porous sheet with ion permeability and insulation properties is used as the separator 13. Specific examples of the porous sheet include microporous thin films, woven fabrics, and non-woven fabrics. Polyolefins such as polyethylene and polypropylene, and cellulose are preferable materials for the separator 13. The separator 13 may have a single-layer structure or a multi-layer structure. In addition, a highly heat-resistant resin layer such as aramid resin may be formed on a surface of the separator 13. A filler layer including an inorganic filler may be formed at an interface between the separator 13 and at least one of the positive electrode 11 and the negative electrode 12.

A positive electrode lead 17 is connected to the positive electrode 11 and a negative electrode lead 18 is connected to a winding end-side of the negative electrode 12. The positive electrode lead 17 extends through a through-hole in the first insulating plate 15 to the sealing assembly 19, and the negative electrode lead 18 extends outside of the second insulating plate 16 to the bottom portion 21 of the outer housing can 20. The positive electrode lead 17 is connected to a lower surface of an internal terminal plate 24 of the sealing assembly 19 by welding or the like to make the sealing assembly 19 a positive electrode terminal. In addition, the negative electrode lead 18 is connected to an inner surface of the bottom portion 21 of the metallic outer housing can 20 by welding or the like to make the outer housing can 20 a negative electrode terminal.

The outer housing can 20 is a cylindrical bottomed metal container with one side in the up-down direction opened. The outer housing can 20 has the bottom portion 21 and a side wall portion 22. The side wall portion 22 is a portion of the outer housing can 20 excluding the bottom portion 21 and a grooved portion 23 to be described later is formed in the side wall portion 22.

A gasket 27 is provided between the outer housing can 20 and the sealing assembly 19 to ensure sealability of the interior of the battery and insulation properties between the outer housing can 20 and the sealing assembly 19. A grooved portion 23 which is a part of the side wall portion 22 projecting inward and which supports the sealing assembly 19 is formed in the outer housing can 20. The grooved portion 23 is preferably formed in an annular shape along a circumferential direction of the outer housing can 20 and supports the sealing assembly 19 with an upper surface thereof. The sealing assembly 19 is fixed to an upper part of the outer housing can 20 by the grooved portion 23 and an opening end portion of the outer housing can 20 which is crimped with respect to the sealing assembly 19.

The sealing assembly 19 is a disk-shaped member comprising a safety valve. The sealing assembly 19 has a structure in which the internal terminal plate 24, an insulating member 25, and a rupture plate 26 are stacked in order from a side of the electrode assembly 14. The internal terminal plate 24 is a metal plate that includes a thick-walled outer circumferential portion 24A to which the positive electrode lead 17 is connected and a thin-walled central portion 24B that is detached from the outer circumferential portion 24A when the internal pressure of the battery exceeds a predetermined threshold. A plurality of vent holes 24C are formed in the outer circumferential portion 24A.

The rupture plate 26 is arranged opposite the internal terminal plate 24 across the insulating member 25. In the insulating member 25, an opening portion 25A is formed in a central portion in a radial direction and vent holes 25B are formed in a portion that overlaps with the vent holes 24C of the internal terminal plate 24. The rupture plate 26 has a valve portion 26A that ruptures when the internal pressure of the battery 10 exceeds a predetermined threshold, and the valve portion 26A is welded or otherwise connected to the central portion 24B of the internal terminal plate 24. The insulating member 25 insulates portions other than a connecting portion between the central portion 24B and the valve portion 26A. In addition, an outer circumferential portion that encloses the valve portion 26A of the rupture plate 26 is held in place, via a gasket 27, between a crimped portion formed by bending the opening of the outer housing can 20 inward and the grooved portion 23.

The valve portion 26A includes a joined portion that is provided at center in the radial direction and protrudes toward the inside of the battery and a thin-walled portion that is formed around the joined portion, and the valve portion 26A is formed in a central portion in the radial direction of the rupture plate 26. The joined portion of the valve portion 26A is joined with the central portion 24B through inside the opening portion 25A of the insulating member 25. When an abnormality occurs in the battery 10 and the internal pressure rises, the generated high-temperature gas pushes the rupture plate 26 upward, ruptures the internal terminal plate 24, separates the central portion 24B from the outer circumferential portion 24A, and the valve portion 26A deforms so as to protrude toward the outside of the battery. Accordingly, a current path in the sealing assembly 19 is interrupted. When the internal pressure of the battery 10 rises further after the interruption of the current path, the thin-walled portion of the valve portion 26A ruptures and an exhaust port for gas is formed in the rupture plate 26.

Note that the structure of the sealing assembly 19 is not limited to the structure shown in FIG. 1. The sealing assembly 19 may have a laminated structure including two vent members or have a convex sealing assembly cap that covers the vent members.

The battery 10 further comprises the first insulating plate 15 arranged between the electrode assembly 14 and the sealing assembly 19, the second insulating plate 16 arranged between the electrode assembly 14 and the bottom portion 21, and the spacer 28 positioned between the second insulating plate 16 and the bottom portion 21. Although details will be described later, in the present embodiment, a plurality of grooves 29 are formed on an upper surface of the spacer 28.

The first insulating plate 15 prevents conduction between the negative electrode 12 and the sealing assembly 19. A shape of the first insulating plate 15 is not particularly limited and may be the same or may differ from the shape of the second insulating plate 16 to be described later.

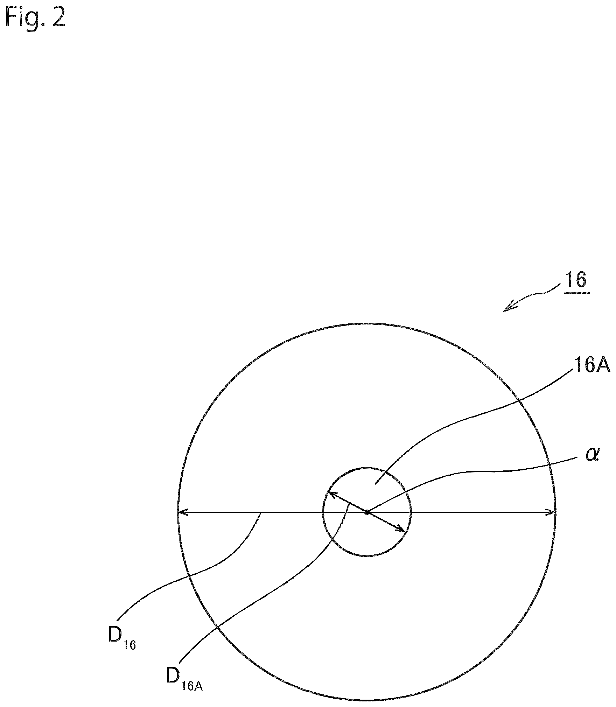

FIGS. 2 to 4 show plan views of examples of the second insulating plate 16. The second insulating plate 16 prevents conduction between the positive electrode 11 and the outer housing can 20. Furthermore, the second insulating plate 16 serves to secure an exhaust path when gases generated inside the battery are exhausted to the outside via the safety valve. In the present embodiment, the second insulating plate 16 has a disk shape. A diameter of the second insulating plate 16 is, for example, slightly smaller than a diameter of an inner surface of the bottom portion 21. Note that the second insulating plate 16 is not limited to a disk shape and an outer circumference of the second insulating plate 16 may have a polygonal shape. In addition, a notch may be formed in a part of the outer circumference of the second insulating plate 16.

The second insulating plate 16 has an opening portion. An opening ratio that is a ratio of an area of the opening portion to a total area of the second insulating plate 16 is preferably greater than or equal to 10% and more preferably greater than or equal to 15%. In this case, when the high-temperature gases generated inside the battery are exhausted to outside of the battery, an exhaust path can be readily secured. In addition, an opening ratio of the second insulating plate 16 is preferably less than or equal to 50% and more preferably less than or equal to 40%. In this case, strength of the second insulating plate 16 is secured and deformation and rupture of the second insulating plate 16 due to expansion of the electrode assembly 14 caused by charging and discharging can be prevented. Therefore, an example of a suitable range of the opening ratio of the second insulating plate 16 is greater than or equal to 10% and less than or equal to 50% and more preferably greater than or equal to 15% and less than or equal to 40%.

A thickness of the second insulating plate 16 may be, for example, greater than or equal to 0.1 mm and less than or equal to 1.0 mm. By making the thickness of the second insulating plate 16 greater than or equal to 0.1 mm, deformation of the second insulating plate 16 can be suppressed and high-temperature gases in the lower portion of the battery can be smoothly exhausted. By making the thickness of the second insulating plate 16 less than or equal to 1.0 mm, stress concentration on the electrode assembly 14 due to a step in the second insulating plate 16 can be suppressed and high-temperature gases in the lower portion of the battery can be smoothly exhausted. The thickness of the second insulating plate 16 is preferably greater than or equal to 50% and less than or equal to 500% of a depth of the grooves 29 formed on the spacer 28 to be described later and more preferably greater than or equal to 150% and less than or equal to 400%.

From the viewpoint of ensuring the strength of the second insulating plate 16, the Young's modulus of the second insulating plate 16 at 25°C is preferably greater than or equal to 10 GPa and more preferably greater than or equal to 20 GPa. An upper limit value of the Young's modulus of the second insulating plate 16 at 25°C is, for example, 200 GPa. Note that the Young's modulus is measured by the compression method (for example, Tensilon Universal Material Testing Machine, manufactured by A&D Company, Limited) under temperature conditions of 25°C. Samples for Young's modulus measurement may be prepared by cutting the second insulating plate 16 to a predetermined size or may be prepared separately using the same material as the constituent material of the second insulating plate 16.

Although the material of the second insulating plate 16 is not particularly limited, the material is preferably a resin such as polypropylene (PP), polyethylene (PE), or nylon (PA).

Shapes of the second insulating plates 16 shown in FIGS. 2 to 4 will now be described.

The second insulating plate 16 shown in FIG. 2 has a first opening portion 16A formed in a range including a center α of the second insulating plate 16, and no opening portions other than the first opening portion 16A are formed. In the example shown in FIG. 2, the first opening portion 16A has an approximately perfect circular shape. A diameter D_{16A} of the first opening portion 16A is, for example, 20% of the diameter D₁₆ of the second insulating plate 16. Note that the first opening portion 16A may have, for example, an approximately polygonal shape.

As described above, the first opening portion 16A is preferably singularly formed in the range including the center α of the second insulating plate 16 in, for example, the middle of the second insulating plate 16. The first opening portion 16A is a passage of high-temperature gases and, at the same time, used as a hole through which a welding rod is passed when welding the negative electrode lead 18 to the inner surface of the bottom portion 21. In the example shown in FIG. 2, the center of the first opening portion 16A coincides with the center of the second insulating plate 16.

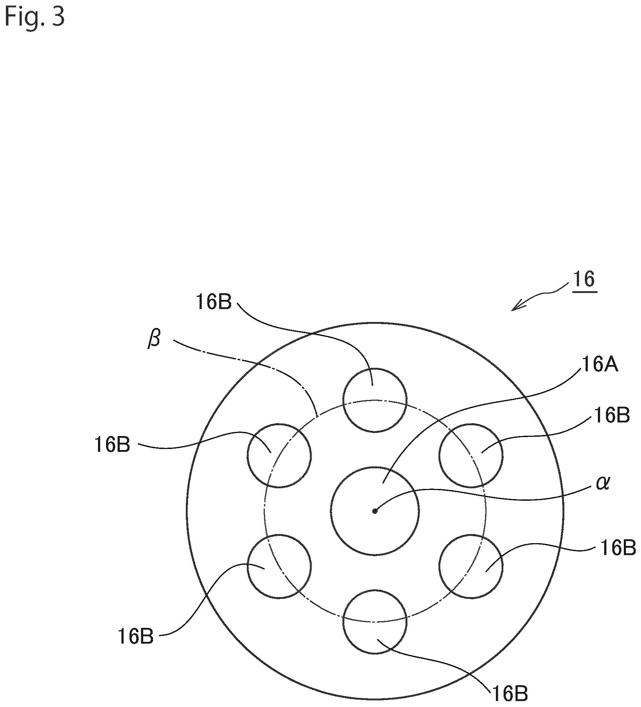

The second insulating plate 16 shown in FIG. 3 has the first opening portion 16A formed in a range including the center α of the second insulating plate 16 and a second opening portion 16B formed in plurality around the first opening portion 16A. In the example shown in FIG. 3, six second opening portions 16B of which a diameter is smaller than that of the first opening portion 16A are formed on the second insulating plate 16. Note that the number of the second opening portions 16B is not particularly limited and may be less than six. Since forming the second opening portions 16B means that the exhaust path for high-temperature gases is formed in plurality, the high-temperature gases inside the battery can be exhausted more smoothly.

Although the second opening portions 16B may be randomly formed around the first opening portion 16A, from the viewpoint of strengthening the second insulating plate 16 and improving flowability of high-temperature gases, the second opening portions 16B are preferably formed equally spaced in one concentric circle around the first opening portion 16A. In the example shown in FIG. 3, six second opening portions 16B with the same shape and same dimensions are formed on a virtual circle β centered at the center α of the second insulating plate 16. Note that while the first opening portion 16A and the second opening portions 16B have approximately perfect circular shapes in the example shown in FIG. 3, shapes are not limited thereto. For example, the first opening portion 16A and the second opening portions 16B may have approximately polygonal shapes.

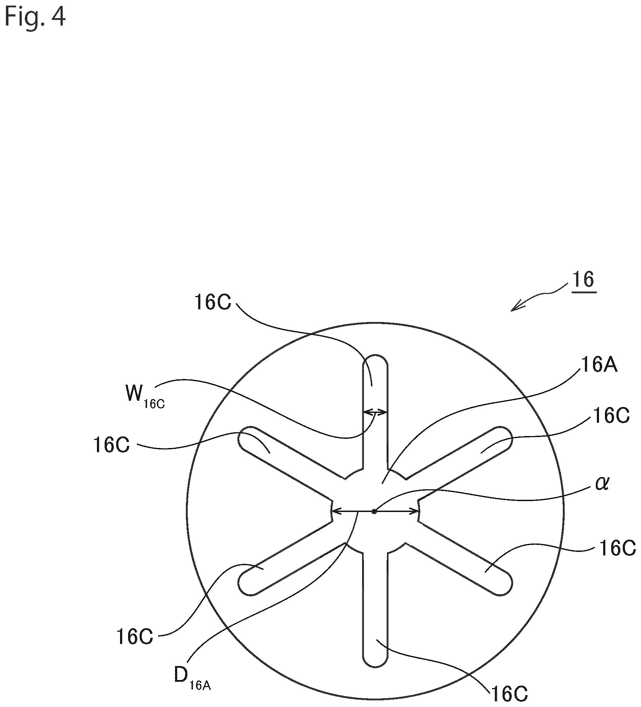

The second insulating plate 16 shown in FIG. 4 has the first opening portion 16A formed in a range including the center α of the second insulating plate 16 and an elongated third opening portion 16C formed radially in plurality from the center of the first opening portion 16A in an outer radial direction. In the example shown in FIG. 4, six third opening portions 16C are formed on the second insulating plate 16. Note that the number of the third opening portions 16C is not particularly limited and may be less than six. While a width W_{16C} of the third opening portions 16C is not particularly limited, for example, the width W_{16C} is greater than or equal to 5% and less than or equal to 20% of the diameter D_{16A} of the first opening portion 16A.

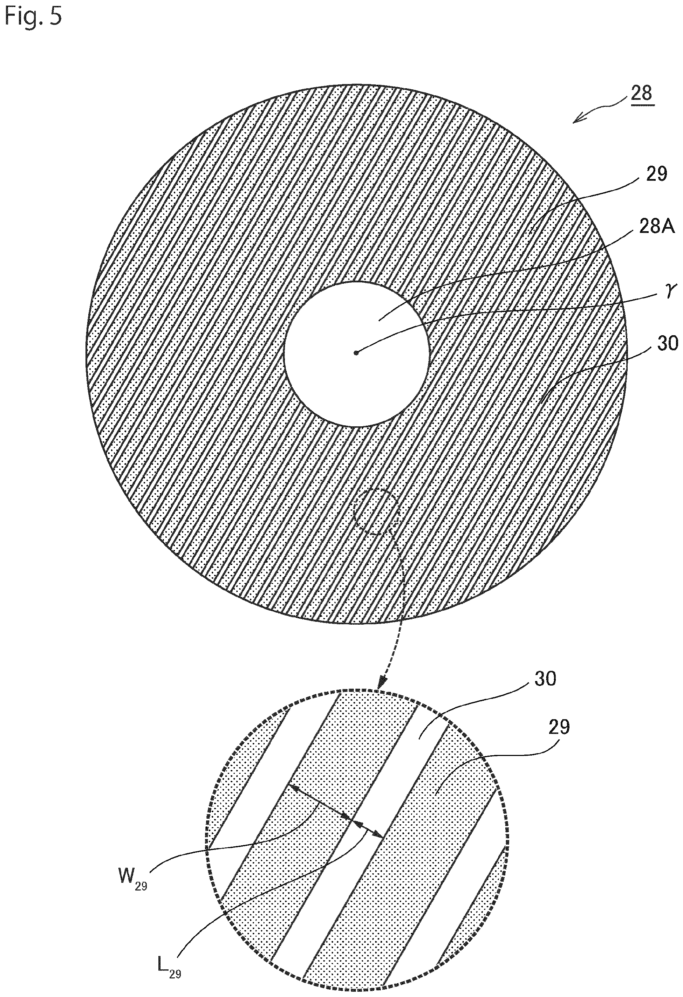

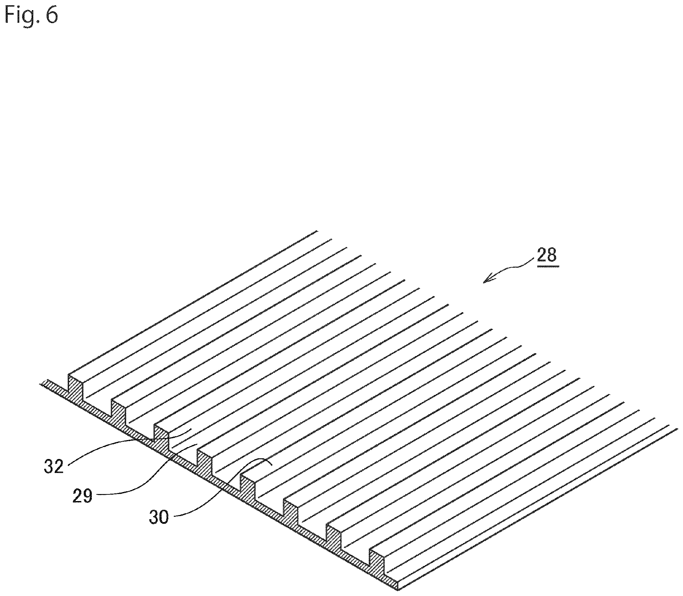

Hereinafter, the spacer 28 will be described in detail with further reference to FIGS. 5 and 6. FIG. 5 is a plan view showing an upper surface side of the spacer 28 and FIG. 6 is a perspective view showing, in an enlarged manner, the grooves formed on the upper surface side of the spacer 28. Note that in FIG. 5, regions where the grooves 29 are formed are indicated by dot hatching.

The spacer 28 is arranged between the second insulating plate 16 and the bottom portion 21. While the spacer 28 is arranged so that the negative electrode lead 18 is sandwiched between the spacer 28 and the bottom portion 21 in the present embodiment, the spacer 28 may be arranged below the negative electrode lead 18. When arranging the spacer 28 below the negative electrode lead 18, the negative electrode lead 18 is weld to the spacer 28. In addition, while the spacer 28 and the bottom portion 21 are not fixed to each other in the present embodiment, a lower surface of the spacer 28 and the bottom portion 21 may be fixed to each other by adhesive bonding, welding, or the like.

While the spacer 28 may be constituted of a resin such as polypropylene (PP) or polyethylene (PE), from the viewpoint of securing strength of the spacer 28, the spacer 28 is preferably constituted of a metal such as aluminum or stainless steel.

In the present embodiment, the spacer 28 has a disk shape. A diameter of the spacer 28 is, for example, slightly smaller than the diameter of the inner surface of the bottom portion 21. Note that the spacer 28 is not limited to a disk shape and an outer circumference of the spacer 28 may have a polygonal shape. In addition, a notch may be formed in a part of the outer circumference of the spacer 28.

One opening portion 28A is formed at a center γ of the spacer 28. The opening portion 28A is used as a hole through which a welding rod is passed when welding the negative electrode lead 18 to the inner surface of the bottom portion 21. In the present embodiment, a center of the opening portion 28A coincides with the center γ of the spacer 28. The number of the opening portion 28A formed in the spacer 28 is not limited to one and two or more opening portions 28A may be formed. In addition, when arranging the spacer 28 below the negative electrode lead 18, the opening portion 28A need not be formed in the spacer 28.

A size of the opening portion 28A is not particularly limited and, for example, a diameter of the opening portion 28A is 30% of the diameter of the spacer 28. In addition, from the viewpoint of readily welding the negative electrode lead 18 to the bottom portion 21, a shape of the opening portion 28A is preferably approximately the same as the first opening portion 16A formed in the second insulating plate 16.

A thickness of the spacer 28 is preferably greater than or equal to 0.3 mm and more preferably greater than or equal to 0.5 mm. In this case, strength of the spacer 28 is secured and deformation and rupture of the spacer 28 due to expansion of the electrode assembly 14 caused by charging and discharging can be prevented. In addition, the thickness of the spacer 28 is preferably less than or equal to 2.5 mm and more preferably less than or equal to 2.0 mm. In this case, a decline in battery capacity due to a decrease in capacity of the electrode assembly 14 can be suppressed. Therefore, an example of a suitable range of the thickness of the spacer 28 is greater than or equal to 0.3 mm and less than or equal to 2.5 mm and more preferably greater than or equal to 0.5 mm and less than or equal to 2.0 mm.

As shown in FIGS. 1 and 5, a plurality of grooves extending in one direction are arranged on the upper surface of the spacer 28 and the plurality of grooves are arranged spaced apart from each other in another direction that is perpendicular to the one direction. Due to the grooves 29 being arranged on the upper surface of the spacer 28, even when the electrode assembly 14 expands in the up-down direction of the battery 10 due to charging and discharging, a gap is formed between the second insulating plate 16 and the spacer 28 by the grooves 29. Accordingly, high-temperature gases that exist in the lower portion of the battery flow into the grooves 29 from opening portions formed in the second insulating plate 16 or from outside of the second insulating plate 16. In addition, the high-temperature gases having flowed into the grooves 29 are guided to the upper portion of the battery 10 via a space 31 (refer to FIG. 1) in a central portion of the electrode assembly 14 and are exhausted to the outside of the battery via the safety valve provided in the sealing assembly 19. Furthermore, due to the grooves 29 being arranged in plurality on the upper surface of the spacer 28, when the electrode assembly 14 expands in the up-down direction of the battery 10 due to charging and discharging, stress on the electrode assembly 14 is distributed. As a result, internal short-circuits due to deformation of electrode plates of the positive electrode 11 and the negative electrode 12 that constitute the electrode assembly 14 can be suppressed.

The grooves 29 are preferably arranged equally spaced from each other in the other direction that is perpendicular to the one direction in which the grooves 29 extend. In this case, in addition to being able to exhaust the high-temperature gases to the outside of the battery more smoothly, stress on the electrode assembly 14 can be more readily distributed when the electrode assembly 14 expands in the up-down direction. While a spacing L₂₉ of the grooves 29 is not particularly limited, for example, the spacing L₂₉ is greater than or equal to 30% and less than or equal to 120% of a width W₂₉ of the grooves 29. An example of the spacing L₂₉ of the grooves 29 is greater than or equal to 0.4 mm and less than or equal to 1.2 mm.

In addition, while the grooves 29 may only be arranged in a partial region of the upper surface of the spacer 28 in a plan view, from the viewpoint of demonstrating the effects of the present disclosure in a more pronounced manner, the grooves 29 are preferably arranged over the entire upper surface of the spacer 28.

A total area of the grooves 29 in a plan view is preferably greater than or equal to 30% of an area of the inner surface of the bottom portion 21 and more preferably greater than or equal to 40%. In this case, stress on the electrode assembly 14 can be more readily distributed when the electrode assembly 14 expands in the up-down direction. In addition, the total area of the grooves 29 is preferably less than or equal to 70% of the area of the inner surface of the bottom portion 21 and more preferably less than or equal to 60%. In this case, the exhaust path of high-temperature gases can be more readily secured and the high-temperature gases inside the battery can be exhausted more smoothly. Therefore, an example of a suitable range of the total area of the grooves 29 is greater than or equal to 30% and less than or equal to 70% and more preferably greater than or equal to 40% and less than or equal to 60% of the area of the inner surface of the bottom portion 21.

The number of projections 30 between adjacent grooves 29 per 1 cm in the other direction that is perpendicular to the one direction in a plan view is preferably greater than or equal to 5 and more preferably greater than or equal to 10. In this case, the exhaust path of high-temperature gases can be more readily secured and the high-temperature gases inside the battery can be more smoothly exhausted. In addition, the number of the projections 30 per 1 cm in the other direction is preferably less than or equal to 25 and more preferably less than or equal to 20. In this case, stress on the electrode assembly 14 can be more readily distributed when the electrode assembly 14 expands in the up-down direction. Therefore, an example of a suitable range of the number of the projections 30 per 1 cm in the other direction is greater than or equal to 5 and less than or equal to 25 and more preferably greater than or equal to 10 and less than or equal to 20.

As shown in FIG. 6, the width of the grooves 29 is approximately constant over the depth direction of the grooves 29. In other words, a side surface 32 of the grooves 29 is perpendicularly formed with respect to the surface of the spacer 28. Note that the shape of the grooves 29 is not limited thereto and the side surface 32 may be inclined so that the width of the grooves 29 becomes narrower downward in the depth direction.

Although a depth of the grooves 29 is uniform over the entire surface in the present embodiment, the depth is not limited thereto. For example, the depth of the grooves 29 may be set so that the closer to the center γ (refer to FIG. 5) of the spacer 28, the deeper the grooves 29. When repeatedly charged and discharged, the electrode assembly 14 tends to expand more at a beginning side of winding than at an end side. Therefore, by making the grooves 29 deeper the closer to the center γ of the spacer 28, the gap is more readily formed at the beginning side of winding of the electrode assembly 14 and the high-temperature gases inside the battery 10 can be smoothly exhausted.

The depth of the grooves 29 is preferably greater than or equal to 0.2 mm and more preferably greater than or equal to 0.3 mm. In this case, the exhaust path of high-temperature gases can be more readily secured and the high-temperature gases inside the battery can be more smoothly exhausted. In addition, the depth of the grooves 29 is preferably less than or equal to 0.7 mm and more preferably less than or equal to 0.6 mm. In this case, a decline in battery capacity due to a decrease in capacity of the electrode assembly 14 can be suppressed. Therefore, an example of a suitable range of the depth of the grooves 29 is greater than or equal to 0.2 mm and less than or equal to 0.7 mm and more preferably greater than or equal to 0.3 mm and less than or equal to 0.6 mm.

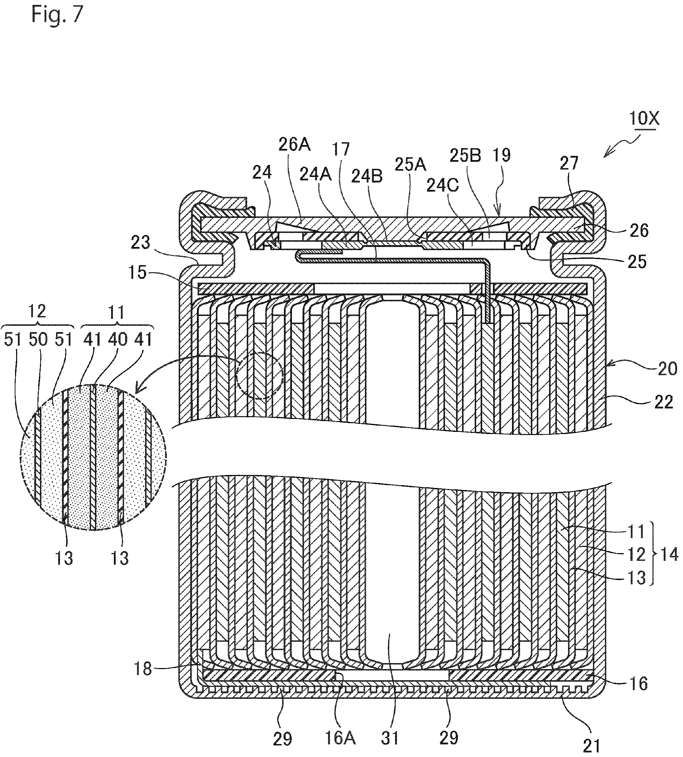

FIG. 7 is a sectional view of a non-aqueous electrolyte secondary battery 10X that is another example of the embodiment. Note that the same components as those of the non-aqueous electrolyte secondary battery 10 will be denoted by same reference numerals as the non-aqueous electrolyte secondary battery 10 and descriptions thereof will not be repeated.

As shown in FIG. 7, the non-aqueous electrolyte secondary battery 10X differs from the non-aqueous electrolyte secondary battery 10 in that the spacer 28 is not provided. In addition, in the non-aqueous electrolyte secondary battery 10X, a plurality of the grooves 29 are formed on the inner surface of the bottom portion 21 of the outer housing can 20. Forming the grooves 29 in the bottom portion 21 without providing the spacer 28 enables the effects of the present disclosure to be demonstrated while suppressing an increase in manufacturing costs.

From the viewpoint of securing strength of the bottom portion 21, the depth of the grooves 29 is preferably less than or equal to 60% and more preferably less than or equal to 50% of the thickness of the bottom portion 21.

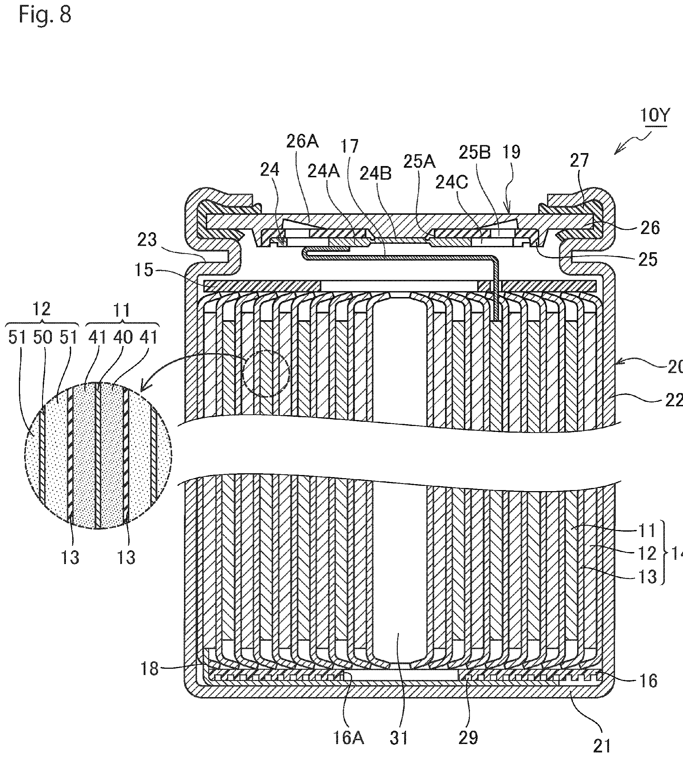

FIG. 8 is a sectional view of a non-aqueous electrolyte secondary battery 10Y that is another example of the embodiment. Note that the same components as those of the non-aqueous electrolyte secondary battery 10 will be denoted by same reference numerals as the non-aqueous electrolyte secondary battery 10 and descriptions thereof will not be repeated.

As shown in FIG. 8, the non-aqueous electrolyte secondary battery 10Y differs from the non-aqueous electrolyte secondary battery 10 in that the spacer 28 is not provided. In addition, in the non-aqueous electrolyte secondary battery 10Y, a plurality of the grooves 29 are formed on the lower surface of the second insulating plate 16. Forming the grooves 29 on the second insulating plate 16 without providing the spacer 28 enables the effects of the present disclosure to be demonstrated while suppressing an increase in manufacturing costs in a similar manner to the non-aqueous electrolyte secondary battery 10X.

From the viewpoint of securing strength of the second insulating plate 16, the depth of the grooves 29 is preferably less than or equal to 60% and more preferably less than or equal to 50% of the thickness of the second insulating plate 16.

### EXAMPLES

While the present disclosure will be described below in greater detail by citing examples, it is to be understood that the present disclosure is not limited to the following examples.

### <Example 1>

### [Fabrication of Positive Electrode]

As a positive electrode active material, aluminum-containing nickel lithium cobaltate (LiNi_{0.88}Co_{0.09}Al_{0.03}O₂) was used. 100 parts by mass of LiNi_{0.88}Co_{0.09}Al_{0.03}O₂ as the positive electrode active material, 1.0 parts by mass of acetylene black as a conductive agent, and 0.9 parts by mass of polyvinylidene fluoride (PVDF) as a binding agent were mixed in an N-methylpyrrolidone (NMP) dispersant to prepare a positive electrode mixture slurry. The prepared positive electrode mixture slurry was uniformly applied to both surfaces of a positive electrode core of 15 µm-thick aluminum foil. Next, after removing NMP at a temperature of 100 to 150°C in a dryer, the positive electrode core was compressed by a roll press machine to fabricate positive electrode plates.

### [Fabrication of Negative Electrode]

Graphite powder was mixed to 70 parts by mass and Si oxide to 30 parts by mass. 100 parts by mass of a negative electrode active material, 1 part by mass of CMC as a thickener, and 1 part by pass of styrene-butadiene rubber as a binding agent were mixed in water to prepare a negative electrode mixture slurry. The negative electrode mixture slurry was applied to both surfaces of a negative electrode core of 8 µm-thick copper foil to form a negative electrode mixture layer. Next, after drying, the negative electrode mixture layer was compressed by a compression roller down to a negative electrode thickness of 0.160 mm to fabricate a negative electrode.

### [Preparation of Non-Aqueous Electrolyte]

LiPF₆ was dissolved at a concentration of 1.2 moles/liter in a mixed solvent prepared by mixing ethylene carbonate (EC), ethyl methyl carbonate (EMC), and dimethyl carbonate (DMC) in a 3:3:4 volume ratio (25°C) to prepare a non-aqueous electrolyte.

### [Fabrication of Non-Aqueous Electrolyte Secondary Battery]

After housing a spacer made of nickel steel and formed with a plurality of grooves in a bottomed cylindrical outer housing can made of low-carbon steel with a bottom-surface diameter of 21 mm, an insulating plate, an electrode assembly, and a non-aqueous electrolyte were housed in the outer housing can. Subsequently, spinning processing was applied to the outer housing can to form a grooved portion. An internal terminal plate was arranged on top of the grooved portion via a gasket, and a positive electrode lead was ultrasonically welded to the upper surface of the internal terminal plate. Subsequently, after depressurization and degassing, a rupture plate was placed on the internal terminal plate and the rupture plate and the internal terminal plate were welded. Finally, an upper end portion of the outer housing can was crimped to obtain a non-aqueous electrolyte secondary battery. Note that the sealing assembly including the safety valve shown in FIG. 1 is constituted of the internal terminal plate, the rupture plate, and the gasket.

In this case, details of the spacer are as follows. Note that the following grooves are formed in an aspect shown in FIGS. 5 and 6 over the entire upper surface of the spacer.
Diameter: 18 mm, thickness: 0.4 mm
Depth of grooves: 0.2 mm
Area of grooves: 30% of area of inner surface of bottom portion of outer housing can

In addition, details of the insulating plate (second insulating plate) provided between the electrode assembly and the bottom portion of the outer housing can are as follows. Note that the opening portion shown in FIG. 2 is formed on the insulating plate.
Diameter: 28 mm, thickness: 0.2 mm
Material: polypropylene (PP)
Shape of opening portion: 5 mm-diameter opening portion formed centered on center of insulating plate

### <Example 2>

A non-aqueous electrolyte secondary battery was fabricated in a similar manner to Example 1 with the exception of changing the spacer to a spacer described below.
Diameter: 18 mm, thickness: 0.4 mm
Area of grooves: 0.2 mm
Area of grooves: 70% of area of inner surface of bottom portion of outer housing can

### <Comparative Example>

A non-aqueous electrolyte secondary battery was fabricated in a similar manner to Example 1 with the exception of not providing a spacer during the fabrication of the non-aqueous electrolyte secondary battery.

### [Ignition Test]

Three batteries were made for each of Examples 1 and 2 and the Comparative Example, and each battery was subjected to constant-current charging at a constant current of 0.2 It and in a temperature environment of 25°C until battery voltage reached 4.2 V and also subjected to constant-voltage charging at 4.2 V until a current value reached 1/100 It. Subsequently, constant-current discharging was performed at a constant current of 0.2 It until battery voltage reached 2.5 V. This charging and discharging cycle was repeated 10 times. Subsequently, constant-current charging was performed at a constant current of 0.2 It until battery voltage reached 4.2 V.

Subsequently, each charged battery was placed in a copper tube equipped with a heater, the heater was turned on, and the battery was ignited. After ignition, the battery was visually checked for the presence/absence of rupture on the side surface of the can. Results of the test are shown in Table 1.

**[Table 1]**

| | Shape of spacer | | | Ignition test |
|---|---|---|---|---|
| | Presence/absence of spacer | Depth of grooves | Ratio of area of grooves to area of bottom portion | Number of ruptures of can side surface/number of tests |
| Example 1 | Present | 0.2mm | 30% | 0/3 |
| Example 2 | Present | 0.2mm | 70% | 0/3 |
| Comparative example | Absent | - | - | 3/3 |

As shown in Table 1, rupture of the side surface of the can was observed in the battery of the Comparative example, whereas no rupture of the side surface of the can was observed during battery ignition in the batteries of Examples 1 and 2. It is assumed that providing a spacer formed with a plurality of grooves forms a gap in a lower portion of a battery, and when the battery ignites, high-temperature gases are guided through the gap to an upper portion of the battery to be exhausted to the outside through a safety valve. On the other hand, in the battery of the Comparative example, it is assumed that because an exhaust path in the lower portion of the battery was not sufficiently secured and high-temperature gases were not sufficiently exhausted to the outside through the safety valve during battery ignition, the side surface of the can ruptured and high-temperature gases blew out from the side surface of the can.

The present disclosure is further illustrated by the following embodiments.

Configuration 1: A non-aqueous electrolyte secondary battery, comprising: an electrode assembly in which a positive electrode and a negative electrode are wound around a separator; a cylindrical bottomed outer housing can that houses the electrode assembly; a sealing assembly that seals an opening of the outer housing can; an insulating plate that is positioned between the electrode assembly and a bottom portion of the outer housing can; and a spacer that is positioned between the insulating plate and the bottom portion of the outer housing can, wherein the sealing assembly has a safety valve that releases internal pressure of the outer housing can when the internal pressure rises to or above a predetermined level, the spacer has a plurality of grooves extending in one direction on at least one surface on a side of the insulating plate, and the plurality of grooves are arranged spaced apart from each other in another direction that is perpendicular to the one direction.

Configuration 2: A non-aqueous electrolyte secondary battery, comprising: an electrode assembly in which a positive electrode and a negative electrode are wound around a separator; a cylindrical bottomed outer housing can that houses the electrode assembly; a sealing assembly that seals an opening of the outer housing can; and an insulating plate that is positioned between the electrode assembly and a bottom portion of the outer housing can, wherein the sealing assembly has a safety valve that releases internal pressure of the outer housing can when the internal pressure rises to or above a predetermined level, at least one of a surface of the insulating plate on a side of the bottom portion of the outer housing can and an inner surface of the bottom portion of the outer housing can has a plurality of grooves extending in one direction, and the plurality of grooves are arranged spaced apart from each other in another direction that is perpendicular to the one direction.

Configuration 3: The non-aqueous electrolyte secondary battery according to Configuration 1 or 2, wherein a depth of the plurality of grooves is greater than or equal to 0.2 mm and less than or equal to 0.7 mm.

Configuration 4: The non-aqueous electrolyte secondary battery according to any one of Configurations 1 to 3, wherein in a plan view when looking down on the plurality of grooves from above, a total area of the plurality of grooves is greater than or equal to 30% and less than or equal to 70% of an area of the inner surface of the bottom portion of the outer housing can.

Configuration 5: The non-aqueous electrolyte secondary battery according to any one of Configurations 1 to 4, wherein in a plan view when looking down on the plurality of grooves from above, the number of projections between adjacent grooves of the plurality of grooves per 1 cm in the other direction is greater than or equal to 5 and less than or equal to 25.

Configuration 6: The non-aqueous electrolyte secondary battery according to any one of Configurations 1 to 5, wherein the plurality of grooves are arranged equally spaced from each other in the other direction.

Configuration 7: The non-aqueous electrolyte secondary battery according to any one of Configurations 1 to 6, wherein a thickness of the insulating plate is greater than or equal to 0.1 mm and less than or equal to 1.0 mm.

Configuration 8: The non-aqueous electrolyte secondary battery according to any one of Configurations 1 to 7, wherein the insulating plate has an opening portion, and an opening ratio that is a ratio of an area of the opening portion to a total area of the insulating plate is greater than or equal to 10% and less than or equal to 50%.

Configuration 9: The non-aqueous electrolyte secondary battery according to Configuration 9, wherein the opening portion has a first opening portion formed in a range including a center of the insulating plate and a second opening portion formed in plurality around the first opening portion.

Configuration 10: The non-aqueous electrolyte secondary battery according to Configuration 9, wherein the second opening portions are formed equally spaced in one concentric circle around the first opening portion.

Configuration 11: The non-aqueous electrolyte secondary battery according to Configuration 8, wherein the opening portion has a first opening portion formed in a range including a center of the insulating plate and a third opening portion formed radially in plurality from a center of the first opening portion.

Configuration 12: The non-aqueous electrolyte secondary battery according to any one of Configurations 1 to 11, wherein the negative electrode includes a negative electrode core and a negative electrode mixture layer formed on the negative electrode core, and the negative electrode mixture layer includes a silicon-containing material as a negative electrode active material.

Configuration 13: The non-aqueous electrolyte secondary battery according to Configuration 12, wherein a content of the silicon-containing material is greater than or equal to 10 mass% with respect to a total mass of the negative electrode active material.

### REFERENCE SIGNS LIST

10 Non-aqueous electrolyte secondary battery, 11 Positive electrode, 12 Negative electrode, 13 Separator, 14 Electrode assembly, 15 First insulating plate, 16 Second insulating plate (insulating plate), 16A First opening portion, 16B Second opening portion, 16C Third opening portion, 17 Positive electrode lead, 18 Negative electrode lead, 19 Sealing assembly, 20 Outer housing can, 21 Bottom portion, 22 Side wall portion, 23 Grooved portion, 24 Internal terminal plate, 24A Outer circumferential portion, 24B Central portion, 24C Vent hole, 25 Insulating member, 25A Opening portion, 25B Vent hole, 26 Rupture plate, 26A Valve portion, 27 Gasket, 28 Spacer, 28A Opening portion, 29 Groove, 30 Projection, 31 Space, 32 Side surface, 40 Positive electrode core, 41 Positive electrode mixture layer, 50 Negative electrode core, 51 Negative electrode mixture layer, α, γ Center, β Virtual circle.

## Claims

1. A non-aqueous electrolyte secondary battery, comprising:
an electrode assembly in which a positive electrode and a negative electrode are wound around a separator;
a cylindrical bottomed outer housing can that houses the electrode assembly;
a sealing assembly that seals an opening of the outer housing can;
an insulating plate that is positioned between the electrode assembly and a bottom portion of the outer housing can; and
a spacer that is positioned between the insulating plate and the bottom portion of the outer housing can, wherein
the sealing assembly has a safety valve that releases internal pressure of the outer housing can when the internal pressure rises to or above a predetermined level,
the spacer has a plurality of grooves extending in one direction on a surface on a side of the insulating plate, and
the plurality of grooves are arranged spaced apart from each other in another direction that is perpendicular to the one direction.

2. A non-aqueous electrolyte secondary battery, comprising:
an electrode assembly in which a positive electrode and a negative electrode are wound around a separator;
a cylindrical bottomed outer housing can that houses the electrode assembly;
a sealing assembly that seals an opening of the outer housing can; and
an insulating plate that is positioned between the electrode assembly and a bottom portion of the outer housing can, wherein
the sealing assembly has a safety valve that releases internal pressure of the outer housing can when the internal pressure rises to or above a predetermined level,
at least one of a surface of the insulating plate on a side of the bottom portion of the outer housing can and an inner surface of the bottom portion of the outer housing can has a plurality of grooves extending in one direction, and
the plurality of grooves are arranged spaced apart from each other in another direction that is perpendicular to the one direction.

3. The non-aqueous electrolyte secondary battery according to claim 1 or 2, wherein a depth of the plurality of grooves is greater than or equal to 0.2 mm and less than or equal to 0.7 mm.

4. The non-aqueous electrolyte secondary battery according to claim 1 or 2, wherein in a plan view when looking down on the plurality of grooves from above, a total area of the plurality of grooves is greater than or equal to 30% and less than or equal to 70% of an area of the inner surface of the bottom portion of the outer housing can.

5. The non-aqueous electrolyte secondary battery according to claim 1 or 2, wherein in a plan view when looking down on the plurality of grooves from above, the number of projections between adjacent grooves of the plurality of grooves per 1 cm in the other direction is greater than or equal to 5 and less than or equal to 25.

6. The non-aqueous electrolyte secondary battery according to claim 1 or 2, wherein the plurality of grooves are arranged equally spaced from each other in the other direction.

7. The non-aqueous electrolyte secondary battery according to claim 1 or 2, wherein a thickness of the insulating plate is greater than or equal to 0.1 mm and less than or equal to 1.0 mm.

8. The non-aqueous electrolyte secondary battery according to claim 1 or 2, wherein
the insulating plate has an opening portion, and
an opening ratio that is a ratio of an area of the opening portion to a total area of the insulating plate is greater than or equal to 10% and less than or equal to 50%.

9. The non-aqueous electrolyte secondary battery according to claim 8, wherein
the opening portion has
a first opening portion formed in a range including a center of the insulating plate and
a second opening portion formed in plurality around the first opening portion.

10. The non-aqueous electrolyte secondary battery according to claim 9, wherein the second opening portions are formed equally spaced in one concentric circle around the first opening portion.

11. The non-aqueous electrolyte secondary battery according to claim 8, wherein
the opening portion has
a first opening portion formed in a range including a center of the insulating plate and
a third opening portion formed radially in plurality from a center of the first opening portion.

12. The non-aqueous electrolyte secondary battery according to claim 1 or 2, wherein
the negative electrode includes a negative electrode core and a negative electrode mixture layer formed on the negative electrode core, and
the negative electrode mixture layer includes a silicon-containing material as a negative electrode active material.

13. The non-aqueous electrolyte secondary battery according to claim 12, wherein a content of the silicon-containing material is greater than or equal to 10 mass% with respect to a total mass of the negative electrode active material.
